# EUROPÄISCHE PATENTSCHRIFT

(11) **EP 0 564 858 B1**
(45) Veröffentlichungstag und Bekanntmachung des Hinweises auf die Patenterteilung: **27.10.1999**
(21) Anmeldenummer: 93104364.0
(22) Anmeldetag: 17.03.1993
(51) Int. Cl.: G06T 7/20, G08G 1/015, G08G 1/04

(54) **Verfahren zur Auflösung von Clustern bewegter Segmente**
Method for resolving clusters of moving segments
Méthode pour la résolution de groupes de segments

(30) Priorität: 06.04.1992 DE 4211512
(43) Veröffentlichungstag der Anmeldung: 13.10.1993
(73) Patentinhaber: SIEMENS AKTIENGESELLSCHAFT, 80333 München (DE)
(72) Erfinder: Kilger, Michael, Dipl.-Ing., D-84061 Ergoldsbach (DE)

(56) Entgegenhaltungen:
- 13. DAGM SYMPOSIUM "MUSTERERKENNUNG 1991", Oktober 1991, MüNCHEN Seiten 507 - 514 FEITEN ET AL 'Ein videobasiertes System zur Erfassung von Verkehrsdaten'
- PATTERN RECOGNITION LETTERS, Bd.6, Nr.3, August 1987, HOLLAND Seiten 199 - 213 HOOSE ET AL 'Automatically extracting traffic data from video-tape using the CLIP4 parallel image processor'

## Beschreibung

Zur Bewältigung heutiger Straßenverkehrsprobleme sind effiziente und intelligente Verfahren zur Verkehrssteuerung erforderlich. Eine wichtige Voraussetzung hierfür ist die Bereitstellung von Daten über den zu regelnden Straßenverkehr. Dies geschieht vorteilhafter Weise mit Hilfe von Videokameras, welche digitale Videobildsequenzen aufnehmen, aus denen die benötigten Verkehrsdaten ermittelt werden. Hierzu gehören beispielsweise die Zahl der vorhandenen Kraftfahrzeuge, der Kraftfahrzeugtyp, die Geschwindigkeit und Position eines jeden Fahrzeugs und die Bewegungsabläufe der Fahrzeuge. Verschiedene Autoren haben Verfahren zur Lösung der oben genannten Probleme vorgeschlagen (-A. Bielik, T. Abramczuk: "Real-time wide-area traffic monitoring: information reduction and model-based approach", Proc. 6th Scandinavian Conference on Image Analysis, 1989, Oulu, Finland, pp.1223-1230; -S. Beucher, J.M. Blosseville, F. Lenoir: "Traffic Spatial Measurements Using Video Image Processing", SPIE Vol.848 Intelligent Robots and Computer Vision: Sixth in a Series (1987), pp. 648-655; -N. Hoose, L.G. Willumsen: "Automatically extracting traffic data from videotape using the CLIP4 parallel image processor", Patt. Recog. Letters, 6, 1987, pp. 199-213; A.D. Houghton, G.S. Hobson, N.L. Seed, R.C. Tocer: "Automatic vehicle recognition", 1989, University of Sheffield, U.K.; -W. Leutzbach, H.P. Bähr, U. Becker, T. Vgtle: "Entwicklung eines Systems zur Erfassung von Verkehrsdaten mittels photogrammetrischer Aufnahmeverfahren und Verfahren zur automatischen Bildauswertung", 1987, Technischer Schlußbericht, Universität Karlsruhe). Diese Verfahren sind jedoch nicht geeignet, die oben genannten Erfordernisse voll zu erfüllen. Insbesondere ist zur Durchführung dieser Verfahren eine teuere Spezialhardware erforderlich.

Der Erfindung liegt daher die Aufgabe zugrunde, ein Verfahren zur Erzeugung einer symbolischen Szenenbeschreibung von Straßenverkehrsszenen für Zwecke der Verkehrsüberwachung aus Videobildsequenzen anzugeben, welches auf einer kostengünstigen, allgemein verfügbaren Hardware, wie z. B. einem Personal Computer, anwendbar ist. Da das wichtigste technische Problem für die Bereitstellung eines solchen Verfahrens die Verbesserung der Auflösung von Fahrzeugclustern aus mehreren sich teilweise gegenseitig verdeckenden Fahrzeugen und die Trennung dieser Cluster in einzelne Fahrzeuge ist, liegt der Erfindung weiterhin die spezielle Aufgabe zugrunde, ein verbessertes Verfahren zur Durchführung einer Auflösung von solchen Clustern anzugeben.

Diese Aufgaben werden durch ein Verfahren zur Auflösung von Clustern bewegter Segmente mit Merkmalen mit Anspruch 1 bzw. durch die Verwendung eines derartigen Verfahrens zur Erzeugung einer symbolischen Szenenbeschreibung einer Videobildsequenz mit Merkmalen nach Anspruch 4 gelöst.

Das erfindungsgemäße Verfahren ist dabei nicht allein zur Analyse von Straßenverkehrsszenen anwendbar, sondern zur Analyse einer großen Zahl von Videosequenzen, in denen sich verschiedene Objekte unabhängig voneinander bewegen und sich dabei gegenseitig teilweise verdecken.

Bei dem erfindungsgemäßen Verfahren werden in einem ersten Schritt Cluster bewegter Segmente detektiert, indem um die bewegten Segmente eines Videobildes umschreibende Rechtecke gelegt werden, deren Größe mit einer vorgegebenen Obergrenze verglichen wird. Diejenigen bewegten Segmente, deren umschreibende Rechtecke größer sind als die vorgegebene Obergrenze werden als Cluster bewegter Segmente kenntlich gemacht. In einem weiteren Schritt wird in jedem dieser Cluster eine leitende horizontale Kante gesucht, der noch kein umschreibendes Rechteck zugeordnet ist. Wird eine solche Kante gefunden, wird ihr ein umschreibendes Rechteck zugeordnet, welches die Breite dieser Kante besitzt, und dessen Höhe durch die mittlere Höhe aller Objekte derjenigen Objektklasse aus einer vorgegebenen Menge von Objektklassen gegeben ist, deren Objekte eine mittlere Breite besitzen, die der Breite der Kante am nächsten liegt. Dieser Schritt wird solange wiederholt, bis keine leitende Kante mehr in dem jeweiligen Cluster detektiert werden kann.

Bei einer Verwendung dieses Verfahrens zur Erzeugung einer symbolischen Szenenbeschreibung einer Videobildsequenz werden bewegte Segmente und Cluster aus bewegten Segmenten in den Bildern einer Videobildsequenz detektiert. Solche Cluster bewegter Segmente werden in Segmente mit umschreibenden Rechtecken aufgelöst, wodurch bewegte Objekte, die sich teilweise gegenseitig verdecken, voneinander getrennt werden. Diese bewegten Objekte werden in ihrer Bewegung durch die Bildebene verfolgt und nach Objektklassen klassifiziert.

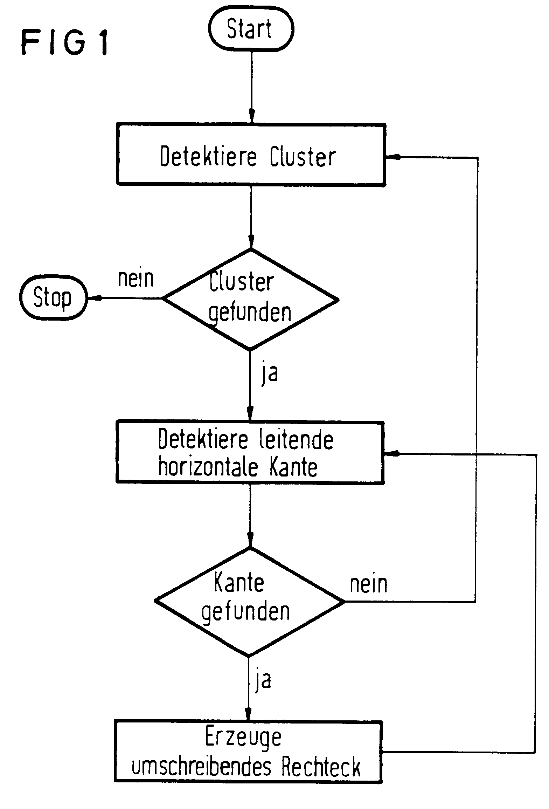

Figur 1 zeigt ein schematisches Ablaufdiagramm des erfindungsgemäßen Verfahrens zur Auflösung von Clustern bewegter Segmente.

Figur 2 zeigt die bewegten Segmente und Cluster solcher bewegten Segmente in einem Videobild einer Videobildsequenz einer Straßenverkehrsszene.

Figur 3 zeigt umschreibende Rechtecke um bewegte Segmente und Cluster von bewegten Segmenten.

Figur 4 zeigt eine Auflösung von Clustern bewegter Segmente mit umschreibenden Rechtecken bewegter Segmente.

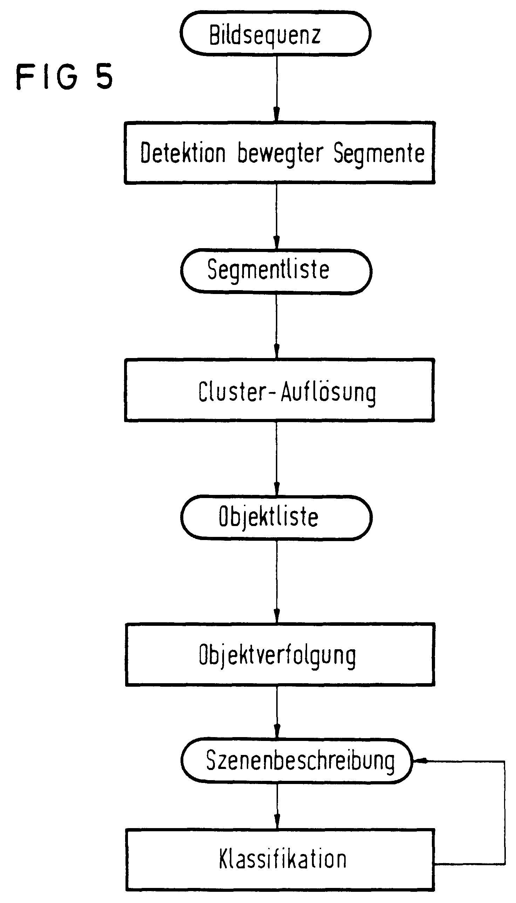

Figur 5 zeigt die Verwendung des erfindungsgemäßen Verfahrens zur Auflösung von Clustern bewegter Segmente bei der Erzeugung einer symbolischen Szenenbeschreibung einer Videobildsequenz.

Im folgenden wird die Erfindung anhand eines bevorzugten Ausführungsbeispiels und mit Hilfe der Figuren näher beschrieben.

Bei einer typischen Anordnung einer Videokamera zur Aufnahme von Videobildsequenzen von Straßenverkehrsszenen ist die Kamera seitlich der Straße in einer gewissen Höhe angebracht, z. B. auf einer Ampel oder einer Brücke. Daraus ergibt sich, daß die dicht hintereinander fahrenden Fahrzeuge in der Bildebene leicht gegeneinander versetzt erscheinen. Aus diesem Grunde ist immer ein Teil der vorderen leitenden Kante eines jeden Fahrzeugs zu sehen. Unter einer leitenden Kante sei in dieser Patentanmeldung die erste sichtbare horizontale Kante eines Fahrzeugs verstanden. Sie ist meistens der Schattenwurf des Fahrzeugs auf der Straße. Bei diffusem Licht kann dieser Kantenteil mittels geeigneter Bildauswerteverfahren detektiert werden. Unter diesen Voraussetzungen ist zur geometrischen Beschreibung eines Fahrzeugs für Zwecke der hier angedachten Auswerteverfahren ein umschreibendes Rechteck angemessen und genügt den Anforderungen zur Klassifikation der Fahrzeuge.

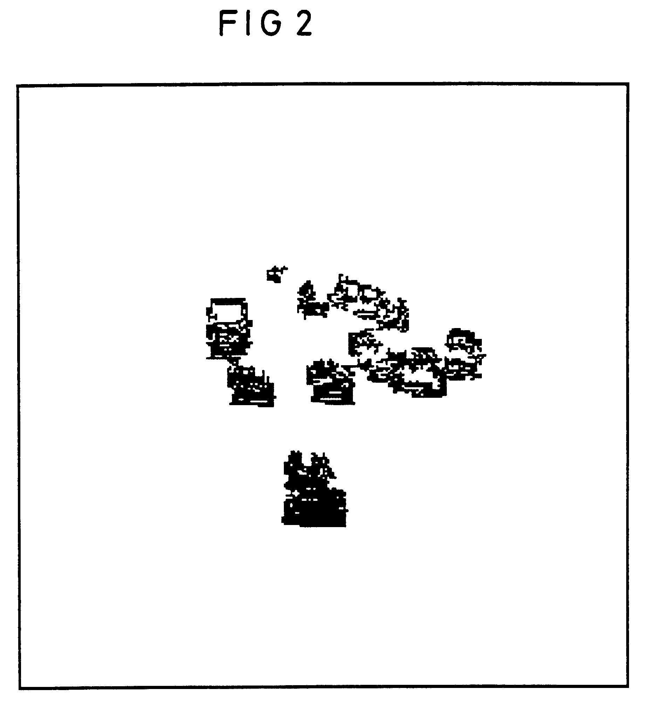

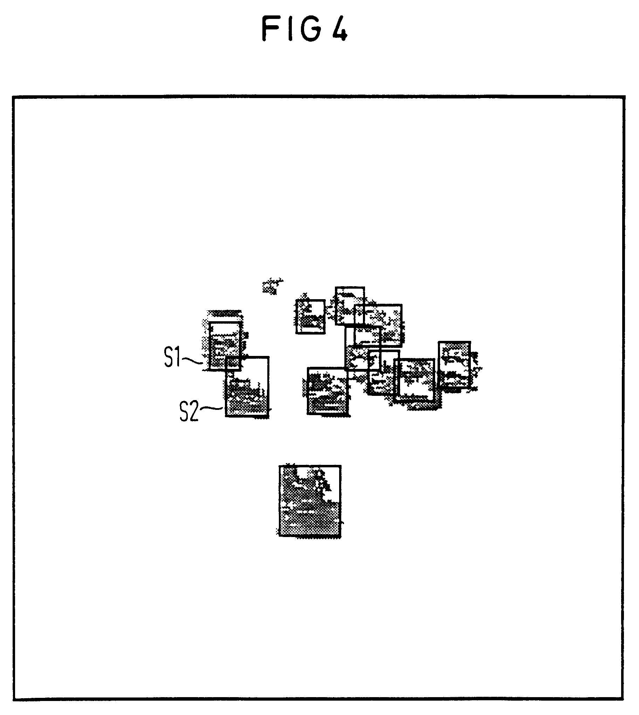

Aus der Literatur sind verschiedene Verfahren zur Detektion bewegter Segmente in Videobildsequenzen bekannt (Feiten, W., Brandt, v. ,A., Lawitzky, G., Leuthäusser, I.: "Ein videobasiertes System zur Erfassung von Verkehrsdaten", 13. DAGM-Symposium 1991, München; -K.P. Karmann, A.v. Brandt: "Moving object segmentation based on adaptive reference images", proc. of EUSPICO 1990, 18.-21.09.90, Barcelona). Mit Hilfe dieser Verfahren werden Bewegtobjektsegmente sehr zuverlässig durch den Vergleich des laufenden Bildes mit einem Hintergrundbild detektiert. Der gesamte Detektionsalgorithmus für bewegte Segmente läuft dabei z. B. wie folgt ab:
- Subtraktion des des laufenden Bildes von einem Hintergrundbild.
   Es wird eine Schwellwertentscheidung durchgeführt, welche Regionen mit rascher Bewegung in der Bildebene von Regionen mit keiner oder langsamer Bewegung trennt. Hierdurch wird eine binäre Objektsegmentmaske erzeugt. Hierbei hängen die Eigenschaften dieser binären Objektsegmentmaske, bei der der unbewegte Hintergrund z. B. durch die Werte 0 und bewegte Segmente durch die Werte 1 dargestellt werden, stark von dem gewählten Schwellwert ab. Wenn dieser Schwellwert zu hoch gewählt wird, wird die Objektsegmentmaske in der Regel stark fragmentiert sein (Figur 2). Im entgegengesetzten Fall, in dem der Schwellwert zu niedrig gewählt wird, werden große Mengen nicht interessierender Bewegungen detektiert, wie z. B. die Bewegung von Blättern. Dieses Problem wird aber mit Hilfe der erwähnten Verfahren durch eine adaptive Schwellwertwahl gelöst.
- Segmentierung der der Objektsegmentmaske.
   Hierzu wird eine Segmentliste aufgebaut, in der für jedes zusammenhängende Gebiet ein umschreibendes Rechteck, dessen Fläche in der Bildebene und eine Schätzung für die entsprechende Fläche des wirklichen Objekts berechnet wird. Letztere wird unter Verwendung einer inversen perspektivischen Abbildung unter der Annahme, daß die Objekte sich auf einer Ebene bewegen, ermittelt.
- Beseitigung von Segmenten, deren Zusammenhang mit Bewegtobjekten unwahrscheinlich ist.
   Diese Segmente werden beseitigt, wenn sie außerhalb der Verkehrsbereiche liegen oder wenn sie zu klein sind, um echte interessierende Bewegtobjekte darzustellen.
- Aktualisierung des Hintergrundbildes.
   Außerhalb des Bereichs der Bewegtsegmente, d. h. dort, wo die Objektsegmentmaske den Wert 0 annimmt, wird eine Adaption zur Aktualisierung des Hintergrundbildes verwendet. Diese basiert auf einem rekursiven Filter mit variablen Koeffizienten. Die Maske besteht dabei aus den umschreibenden Rechtecken der einzelnen Fahrzeuge (Figur 4). Hierdurch werden die Objekte, die den Hintergrund verdecken, angemessener beschrieben, als durch die ursprüngliche Objektsegmentmaske, welche mit Hilfe des Schwellwerts erzeugt wurde.

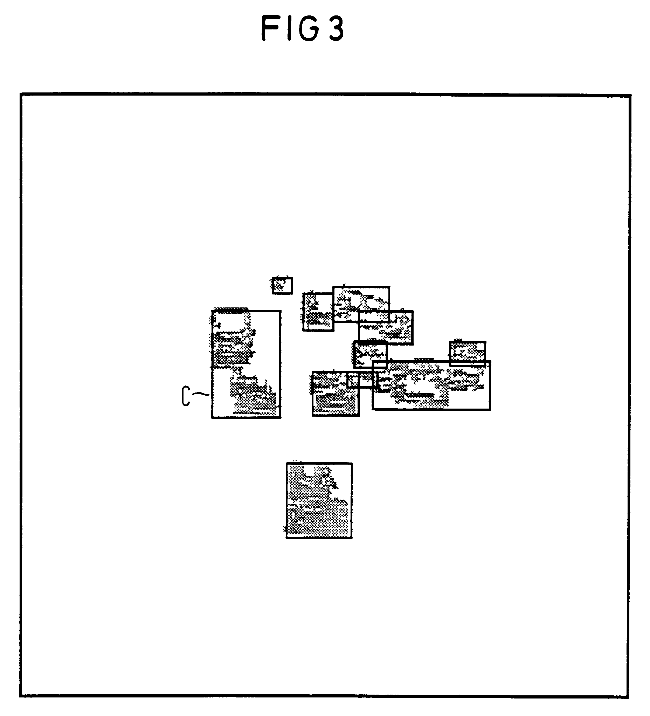

Auf der Grundlage derartiger Bewegtsegmente in Videobildern kommt nun das eigenliche erfindungsgemäße Verfahren zur Auflösung von Clustern bewegter Segmente zur Anwendung. Die Objektsegmentmaske wird segmentiert, d. h. es werden zusammenhängende Pixelbereiche zu einem Segment zusammengefaßt, was z. B. mit Hilfe des Verfahrens von C.-E. Liedtke und M. Ender. Wissensbasierte Bildverarbeitung, S. 62-67, Springer Verlag 1989, durchgeführt werden kann. Zur Beschreibung der Bewegtobjekte wird hier das umschreibende Rechteck genommen. Die Breite des umschreibenden Rechtecks in Bildkoordinaten wird ferner mittels der inversen perspektivischen Transformation (K.S. Fu, R.C. Gonzales, C.S.G. Lee: Robotics, pp. 307-325, Mc Graw-Hill Book Company 1987) in die reale Breite des Fahrzeugs umgerechnet. Ist diese Breite größer als die maximal zulässige Breite eines einzelnen Fahrzeugs (in der Regel 2,5 m), so wird das Bewegtobjekt als Fahrzeugcluster identifiziert, d. h. es befinden sich mehrere Fahrzeuge in einem umschreibenden Rechteck (s. Figur 3).

Mit Hilfe eines geeigneten Bildauswerteverfahrens, z. B. mit Hilfe von Sobel-Operatoren (P. Haberäcker: Digitale Bildverarbeitung, Hanser Studien Bücher 1985) werden horizontale Kanten innerhalb des Fahrzeugclusters gewonnen. Über die zur Kamera am nächsten gelegene Kante wird das umschreibende Rechteck gelegt. Diese Kante ist im allgemeinen voll sichtbar, da sie zum ersten bzw. letzten Fahrzeug in einer Kolonne gehört. Zur Berechnung der Breite des Fahrzeugs wird die Breite dieser Kante genommen. Um zur Höhe des umschreibenden Rechtecks zu gelangen, wird anhand der Breite der Kante die Klasse des Fahrzeugs bestimmt. Anhand dieser Klasse kann nun die mittlere Höhe der Fahrzeuge dieser Klasse eingesetzt werden.

Ausgehend von dem führenden Fahrzeug wird nun die nächste leitende Kante detektiert, die sich unmittelbar links oder rechts der ersten Kante befindet (innerhalb dieses Segmentes). Es wird dazu angenommen, daß je nach örtlicher Lage (rechts oder links) der entsprechende Teil der Kante verdeckt ist. Auf den sichtbaren Teil wird das umschreibende Rechteck mit mittlerer Breite und Höhe eines PKW gelegt. Dieser Schritt wird so lange wiederholt, bis keine leitenden Kanten mehr in dem Segment detektiert werden können.

Das Verfahren wird über die ganze Bildsequenz angewendet und die Plausibilität über die korrekte Trennung von Fahrzeugclustern bzw. die Klassifizierung wird über die Bildsequenz festgehalten.

Figur 3 zeigt die Fahrzeugcluster und ihre umschreibenden Rechtecke in der Bildebene. Das mit C bezeichnete Fahrzeugcluster besteht, wie in Figur 3 sichtbar, aus zwei Einzelfahrzeugen. In Figur 4 ist dargestellt, wie dieses Fahrzeugcluster C mit Hilfe des erfindungsgemäßen Verfahrens in zwei einzelne Bewegtsegmente mit ihren umschreibenden Rechtecken zerlegt ist, die jeweils einem Einzelfahrzeug entsprechen.

Bei einer bevorzugten Ausführungsform der Erfindung wird zur Auflösung der Cluster in einzelne Segmente auch von Wissen aus vorhergehenden Bildern Gebrauch gemacht. Fahrzeuge oder allgemein Bewegtobjekte, die sich von der Kamera entfernen, sind normaler Weise zu vorangehenden Zeiten als isolierte Objekte sichtbar gewesen und haben erst im Laufe der Zeit mit anderen Bewegtsegmenten Cluster gebildet. Hierdurch wird die Trennung solcher im Laufe der Zeit entstehenden Cluster erheblich vereinfacht, falls entsprechende Listen von Objekten und Bewegtsegmenten geführt werden. Andererseits werden Bewegtobjekte, die sich auf die Kamera zubewegen, zunächst innerhalb von Clustern gesehen, welche sich nach und nach auflösen. In diesem Fall ist ein Auflösungsalgorithmus vorteilhaft, der hauptsächlich auf der Verarbeitung eines Bildes basiert. In jedem Falle ist es möglich, durch Vergleich von Bilder zu verschiedenen Zeiten Plausibilitätswerte für das Ergebnis der Clusterauflösung aufzustellen. Dabei müssen auch Segmente, die zum selben Bewegtobjekt gehören, vereinigt werden. Hierzu wird die gleiche Information wie zum Auflösen von Clustern benötigt. Die Ergebnisse dieser Verarbeitung werden in geeignet strukturierten Objektlisten abgelegt.

Zur Verfolgung von bewegten Objekten wird ein Tracking-Algorithmus verwendet, dessen Hauptaufgabe darin besteht, die detektierten Bewegtobjekte zu verfolgen und ihre jeweiligen Lagen im nächsten Bild vorherzusagen. In einer Trackliste wird die gesamte symbolische Szenenbeschreibung gespeichert. Jeder Track hat dabei die folgenden Attribute:
- Die laufende Position,
- die vorhergesagte Position im nächsten Bild,
- die momentane Geschwindigkeit,
- die vorhergesagte Geschwindigkeit im nächsten Bild,
- die Breite,
- ein Wert für die Plausibilität.

Der Tracking Algorithmus besteht dabei aus den folgenden Unteralogrithmen:
- Zuweisung detektierte Bewegtobjekte zu bestehenden Tracks: Dabei wird die Position eines Objekts definiert als der Mittelpunkt der führenden Kante. Das Objekt, welches sich am nächsten an der vorhergesagten Position eines Tracks befindet, wird diesem Track zugeordnet.
- Erzeugung neuer Tracks: Ein neuer Track wird erzeugt, falls ein detektiertes Objekt keinem existierendem Track zugeordnet werden kann.
- Beseitigung von Tracks: Falls im laufenden Zyklus ein Objekt keinem bestehenden Track zugeordnet werden kann, wird dieser Track mit Hilfe einer Kalmanfilter Prädiktion extra poliert. Falls die extra polierte Position sich außerhalb der Szene befindet, wird der Track beseitigt. Anderenfalls wird die Plausibilität dieses Tracks herabgesetzt. Falls die Plausibilität kleiner ist als eine vorgegebene Schranke, wird der Track ebenfalls beseitigt.
- Vorhersage der Position und der Geschwindigkeit für den nächsten Zyklus: Die Position und Geschwindigkeit der Tracks wird in Weltkoordinaten gefiltert unter Verwendung eines Kalmanfilters. Die Verwendung von Kalmanfiltern sorgt für eine Glättung der Meßwerte und stellt eine Schätzung der Lagen und Geschwindigkeiten der Bewegtobjekte zur Verfügung. Experimente haben ergeben, daß ein konstanter Kalmanfilter Koeffizient (Kalman-Gain) ausreichend ist.

Bei der Klassifikation der Objekte werden diesen eine von mehreren Klassen zugeordnet. Im Falle von Kraftfahrzeugen sind diese Klassen beispielsweise: Lastwagen, Personenkraftwagen, Motorräder und Fahrräder. Es hängt von der jeweiligen Anwendungssituation ab, welche Merkmale der Objekte sich am Besten zur Klassifikation eignen. Wenn ein Objekt sich auf die Kamera zubewegt, bietet es sich an, als erstes Merkmal die Breite des umschreibenden Rechtecks zu verwenden. Diese Breite wird über die gesamte Bildfolge verfolgt und sie wird über mehrere Bilder der Folge geschätzt.

Falls eine Drehbewegung eines Fahrzeugs oder allgemein eines Bewegtobjekts durch den Verfolgungsalgorithmus detektiert wird, wird die leitende Kante als geeignetes Merkmal herangezogen. Diese leitende Kante wird dann wiederum verfolgt über mehrere Bilder, wobei jeweils ein Schätzwert berechnet wird. Dabei wird die vorhergesagte Position zur Verfolgung von Merkmalen herangezogen. Ein anderes mögliches Merkmal ist die Höhe des umschreibenden Rechtecks. Alle diese Meßwerte werden mit Hilfe von Kalmanfiltern oder mit Hilfe eines Kalmanfilters gefiltert und dabei werden die Längen und Höhen der Bewegtobjekte berechnet.

Bei experimentellen Untersuchungen des erfindungsgemäßen Verfahrens stellte sich heraus, daß eine Bildauflösung von 256 x 256 Pixeln, eine Grauwerttiefe von 8 bit und eine Bildrate von 8 1/3 Hz ausreichend waren. Es konnte gezeigt werden, daß ein handelsüblicher Personal Computer auf der Basis eines Intel 386er Prozessors, unter Verwendung eines digitalen Signalprozessors und einer frame grabber Karte zur Durchführung einer Objektverfolgung in Echtzeit auf der Basis des erfindungsgemäßen Verfahrens ausreichend war. Dabei wird die low-level Bildverarbeitung (Hintergrundextraktion und Segmentierung) mit Hilfe des digitalen Signalprozessors durchgeführt. Der Wirtsrechner bearbeitet dagegen die Segmentliste und führt die high-level Algorithmen aus. Zusätzlich überwacht er die Kommunikation zwischen den verschiedenen Subsystemen des Gesamtsystems.

Das erfindungsgemäße Verfahren wurde mit Hilfe verschiedener Verkehrsszenen unter verschiedenen Beleuchtungsbedingungen getestet. Dabei zeigt sich, daß die Fehler in der Schätzung von Lagen und Geschwindigkeiten kleiner als 3 % waren.

Das erfindungsgemäße Verfahren kann beispielsweise mit Hilfe eines Computer Programms der nachstehenden Art ausgeführt werden.

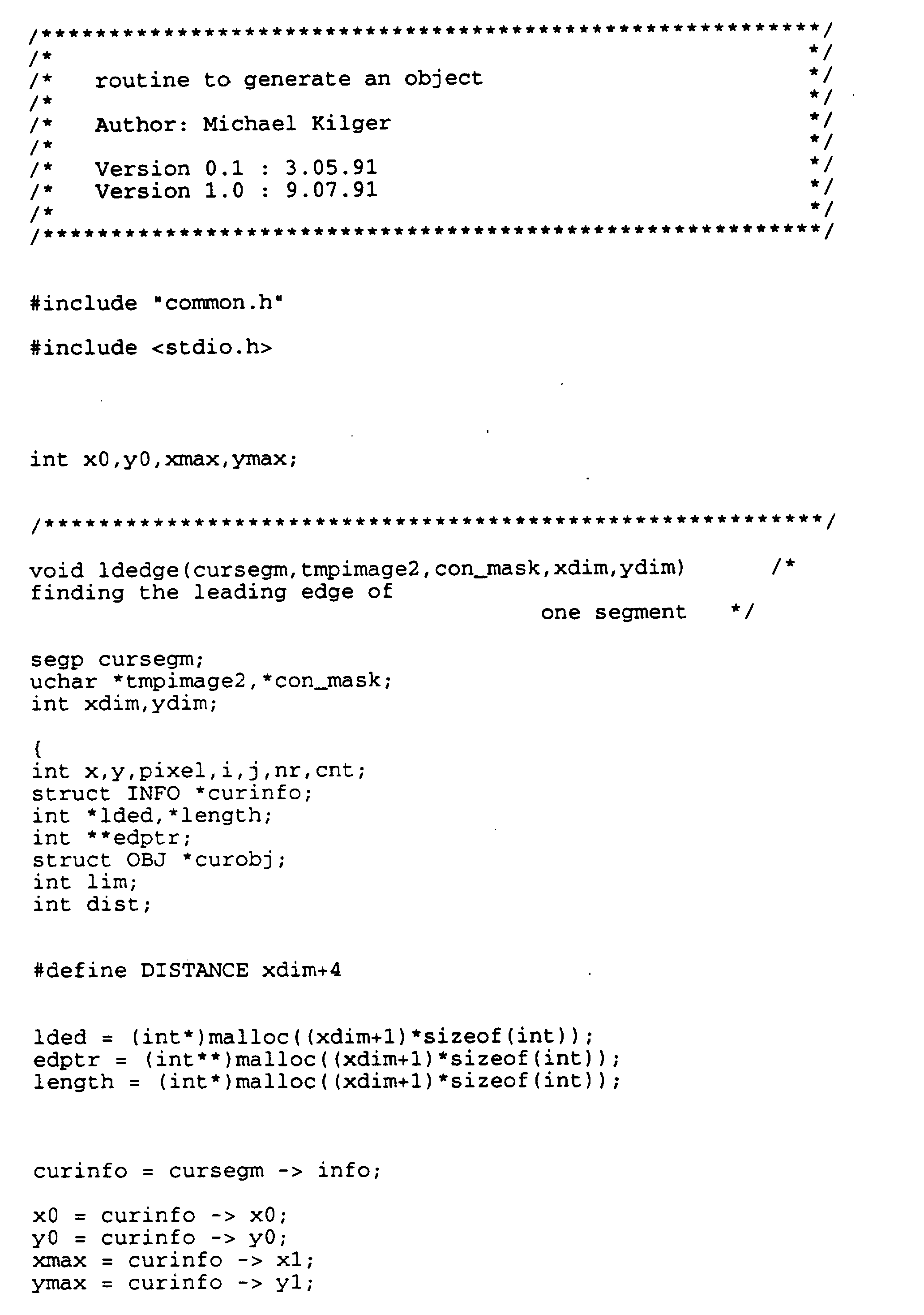

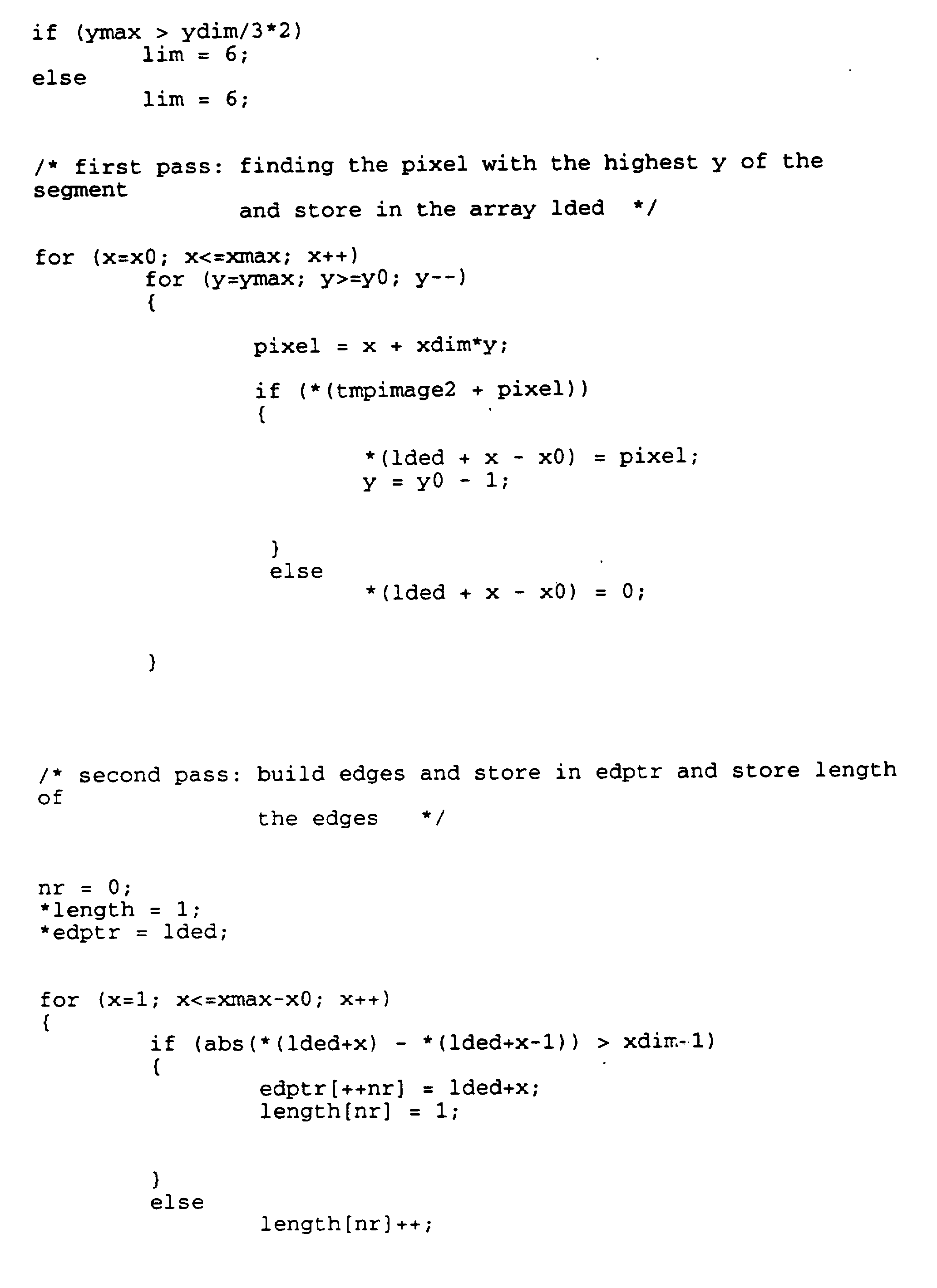

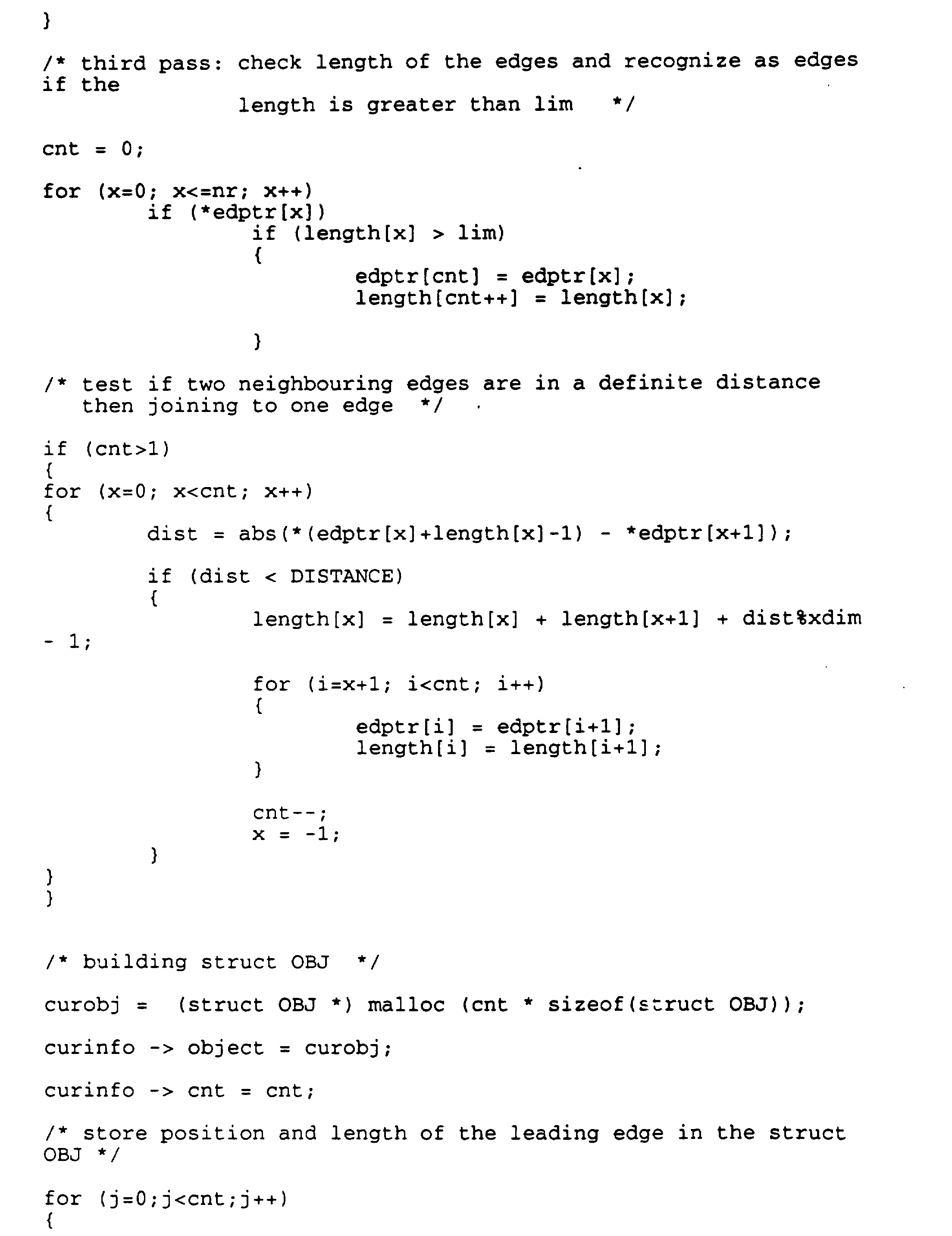

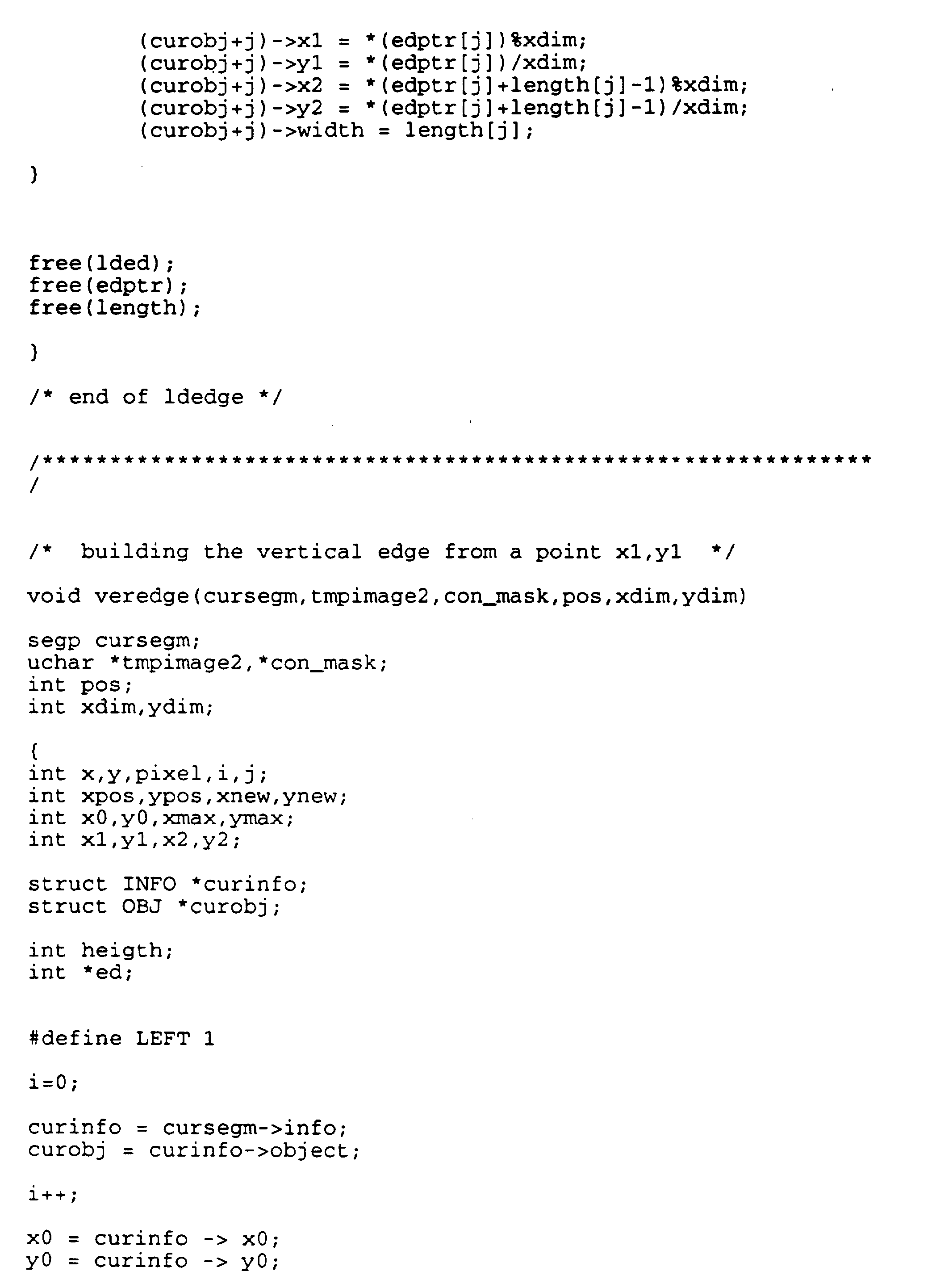

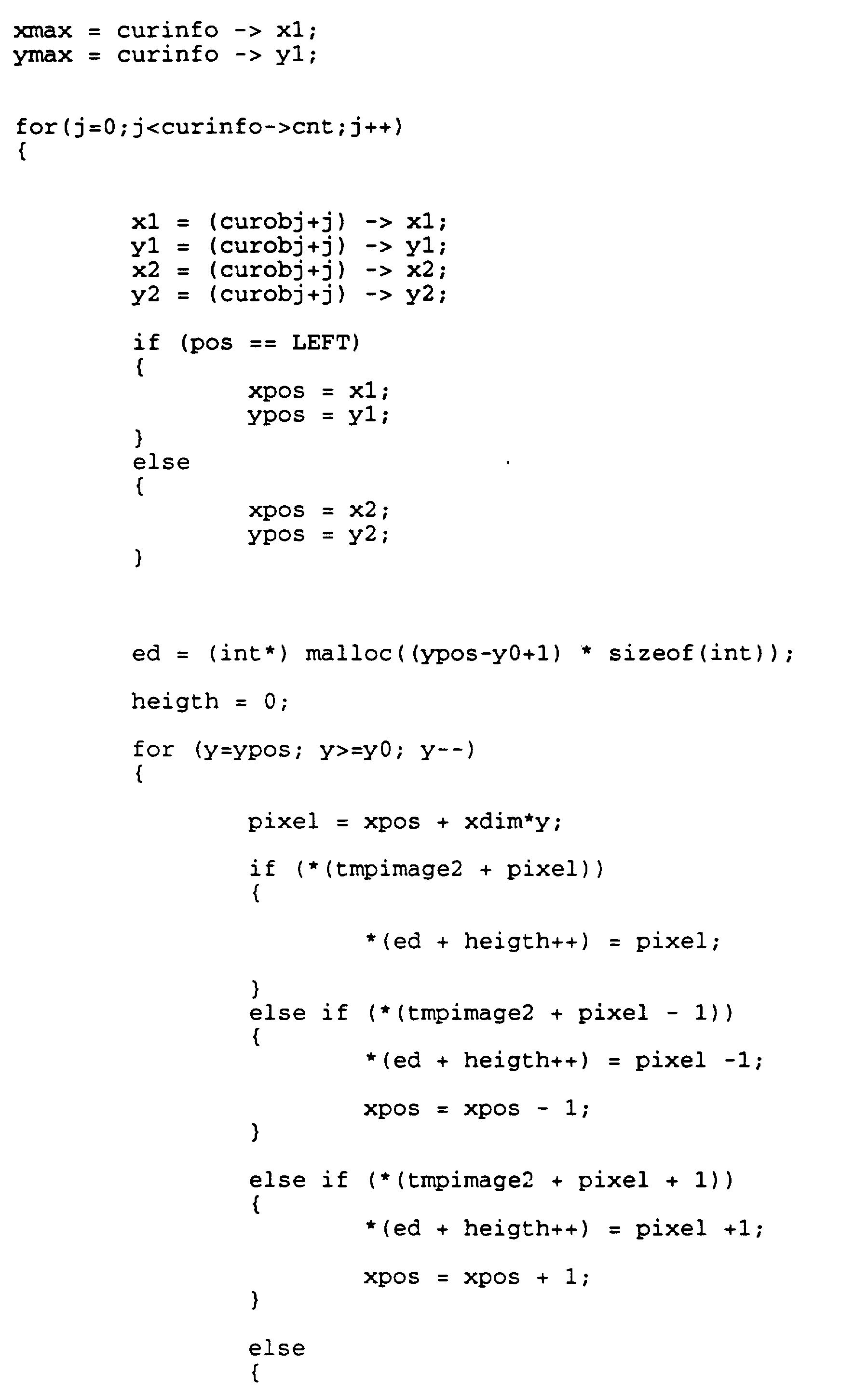

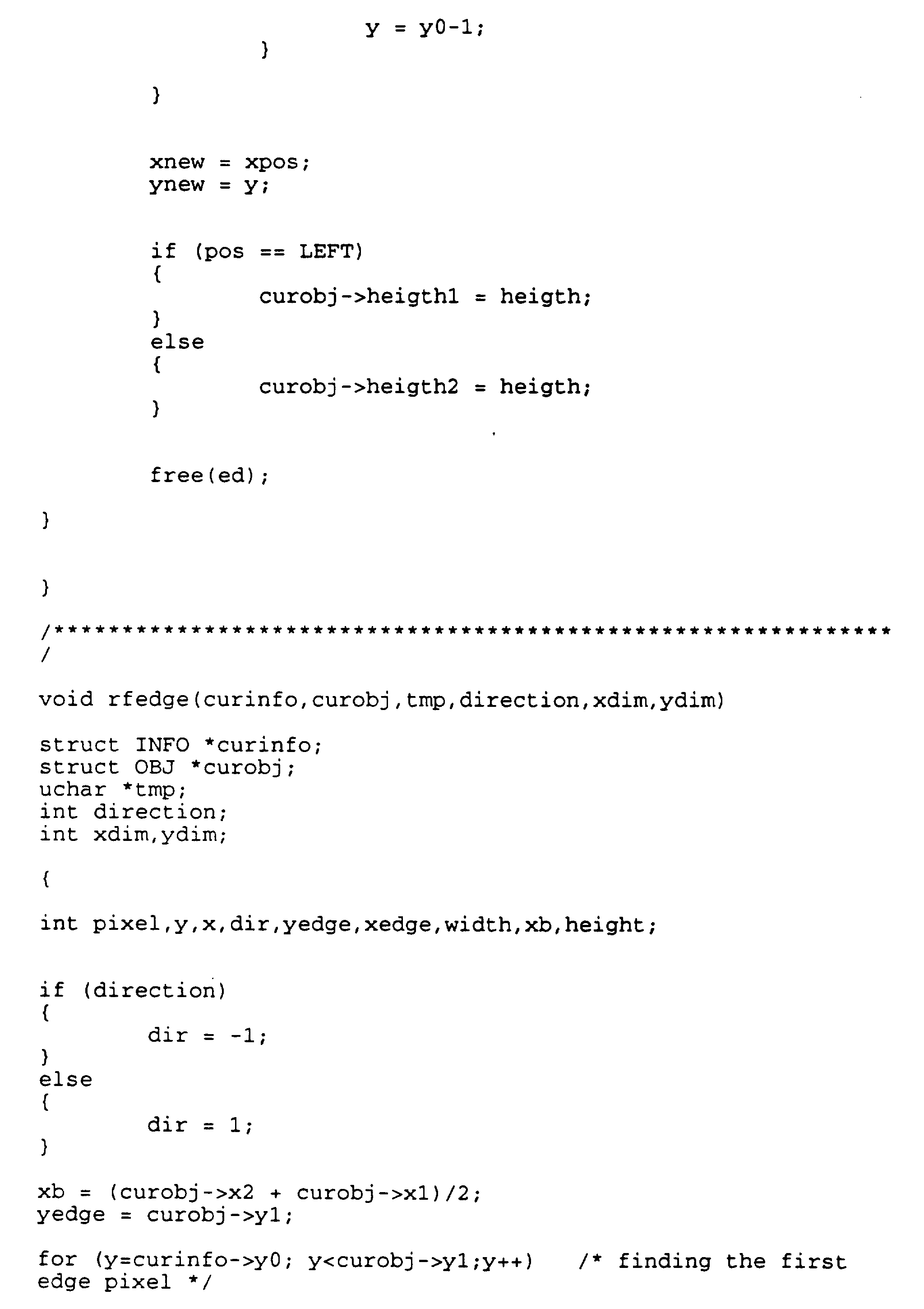

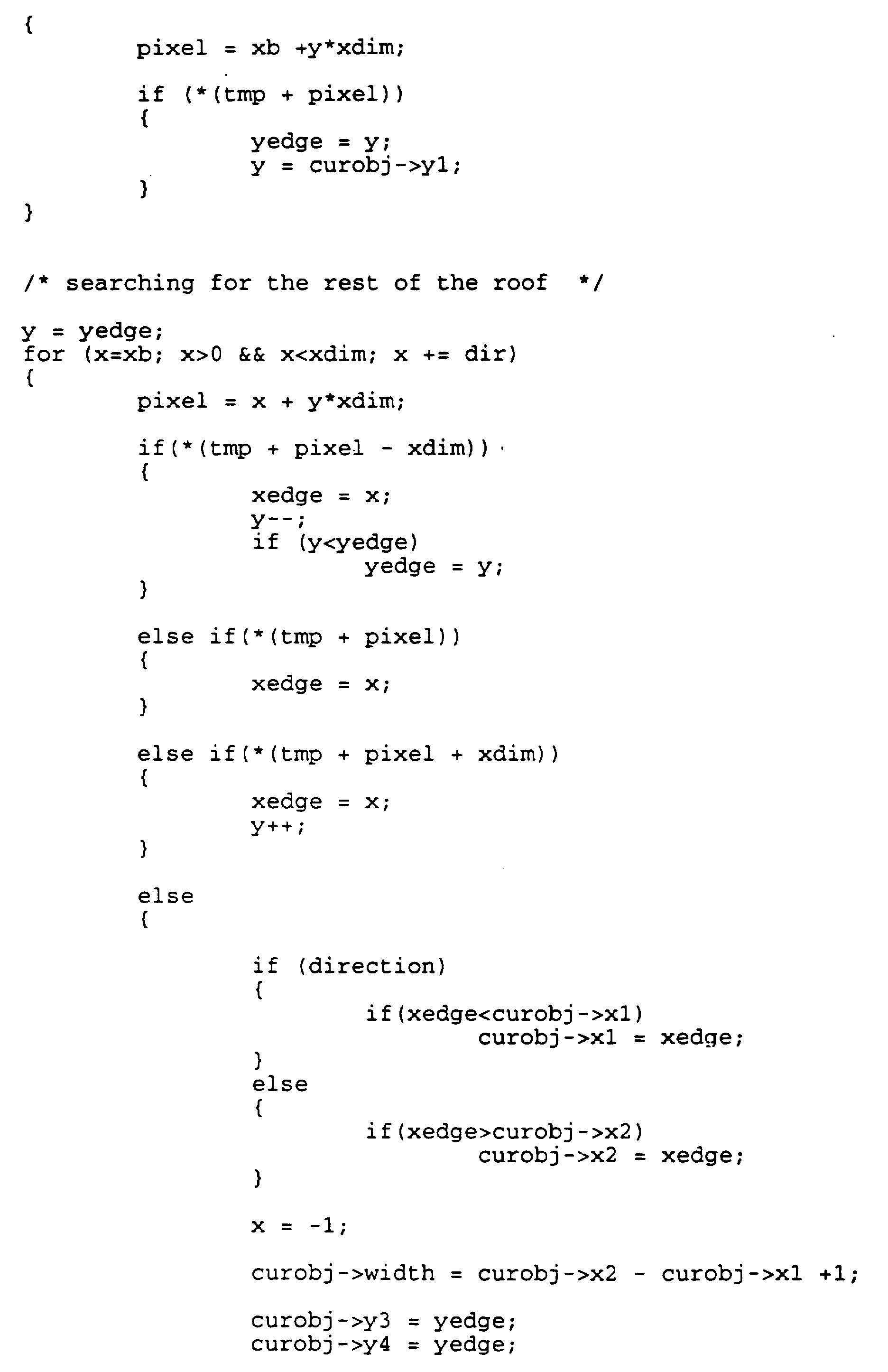

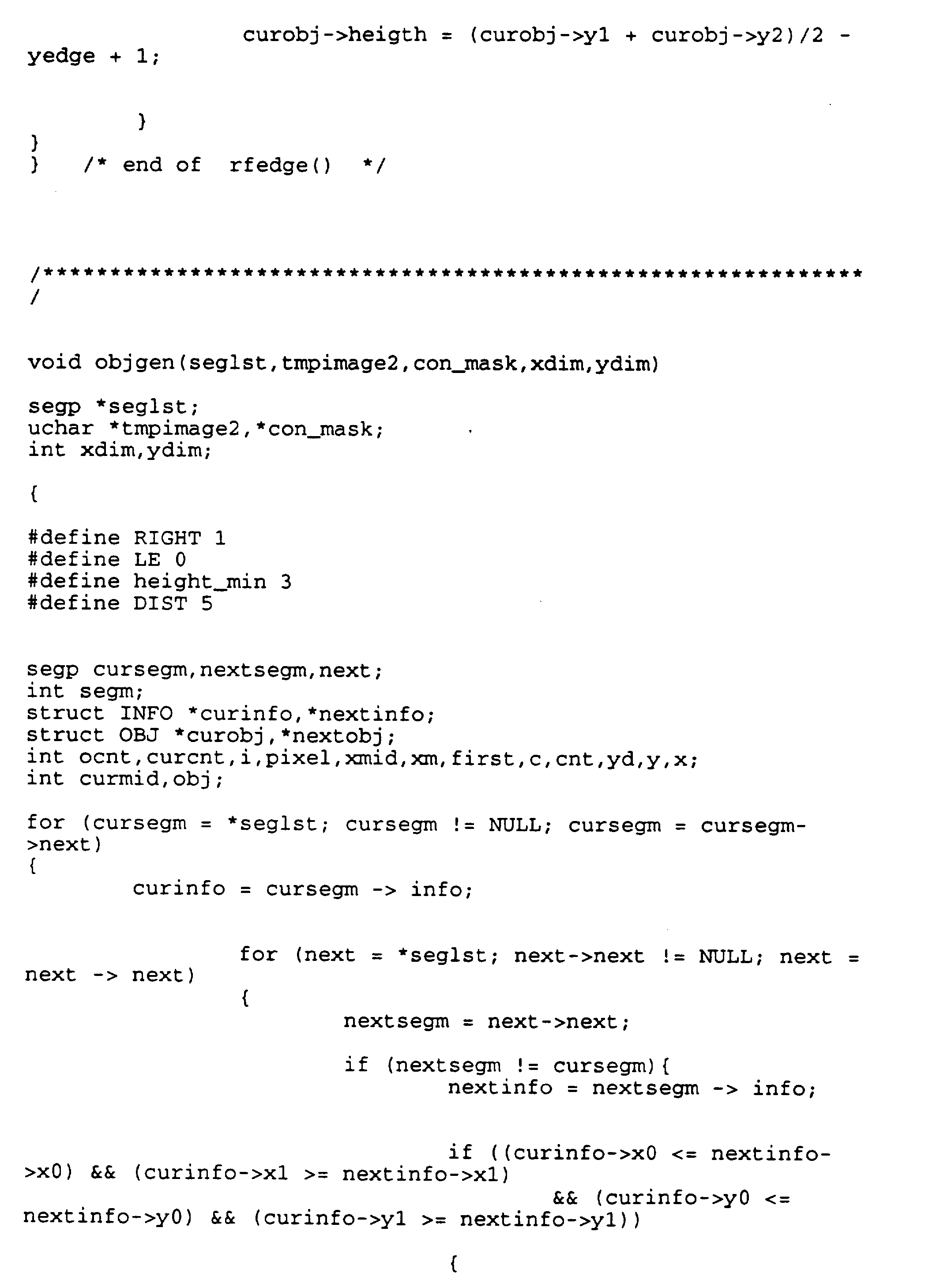

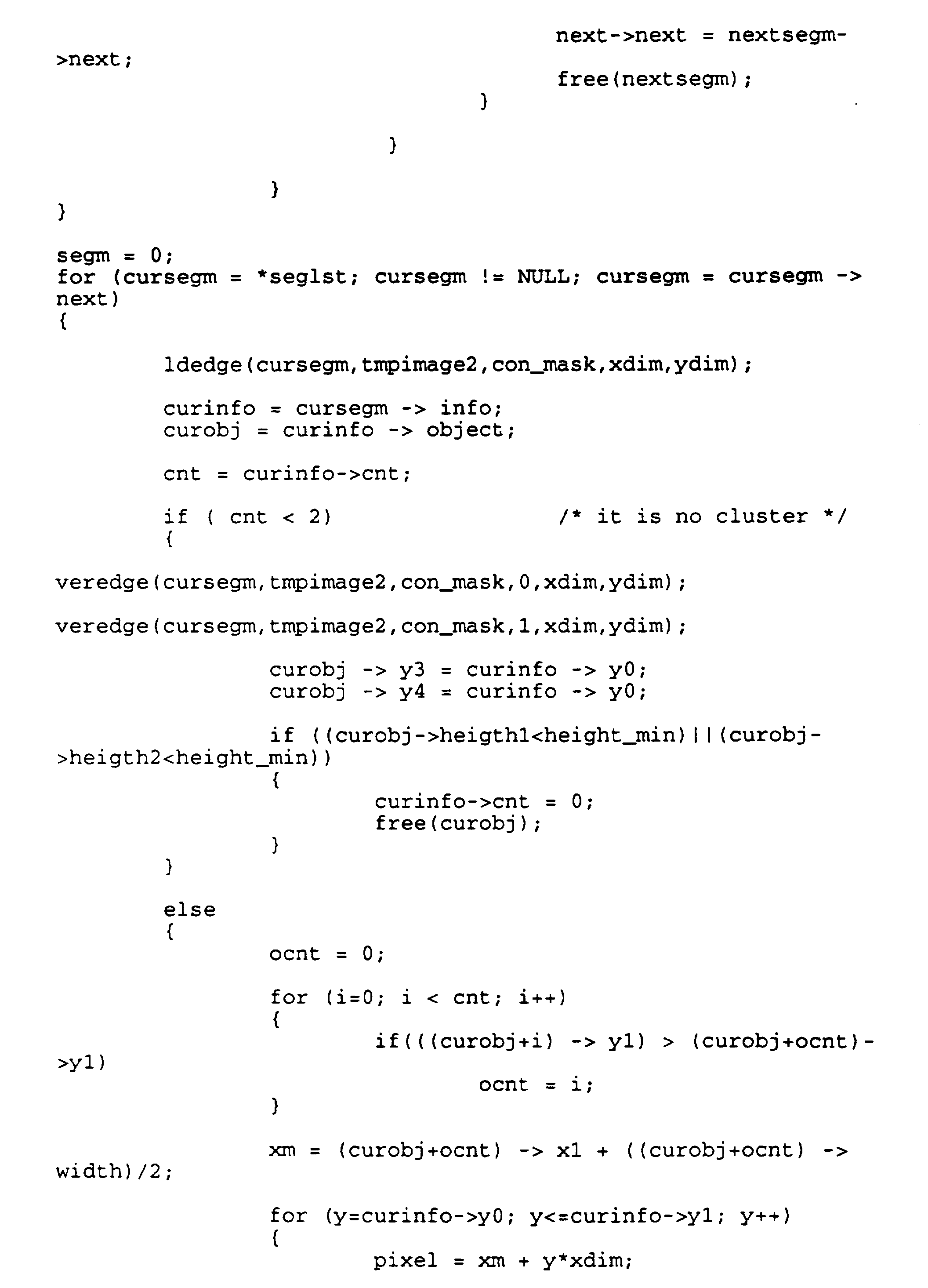

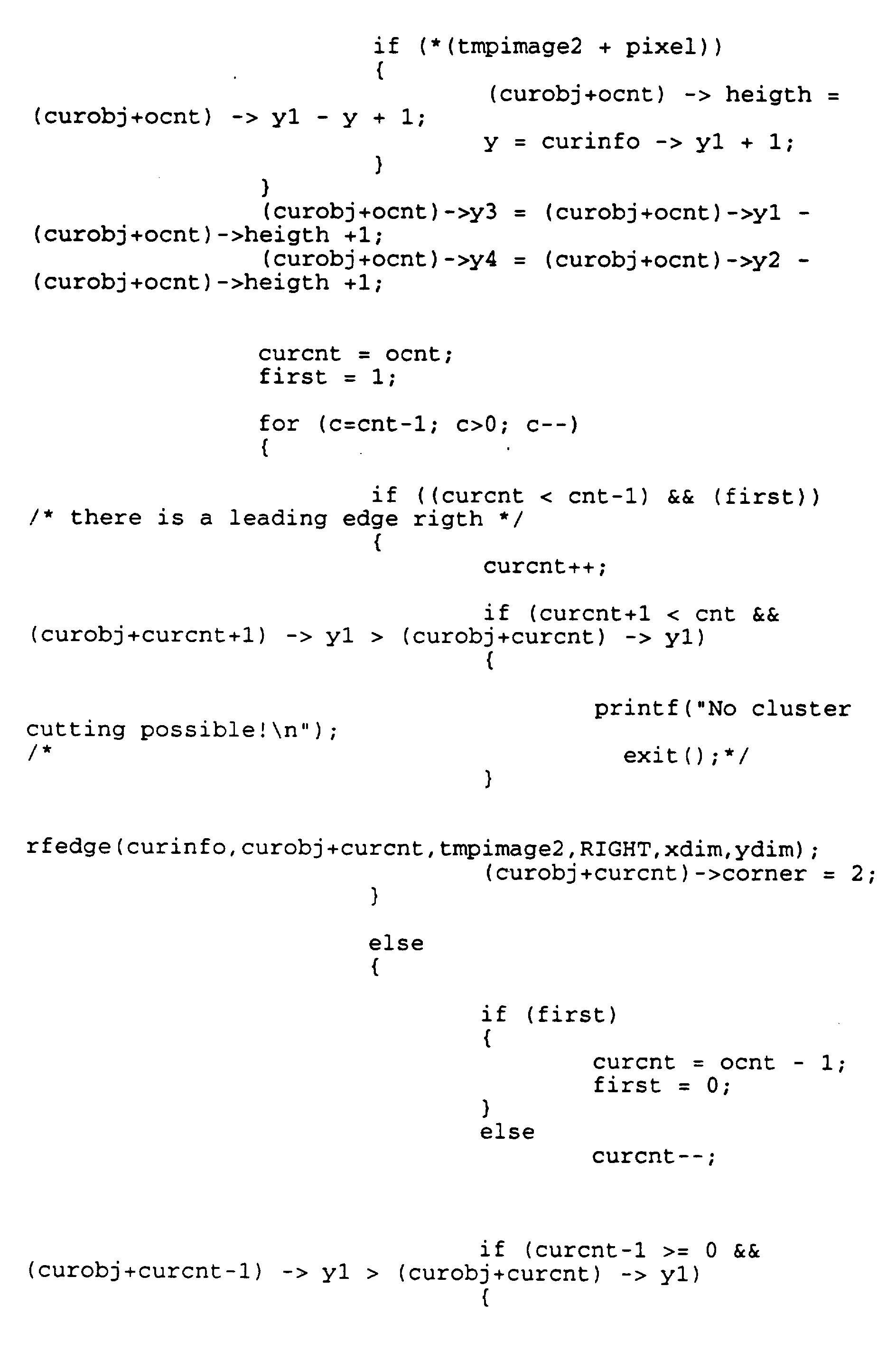

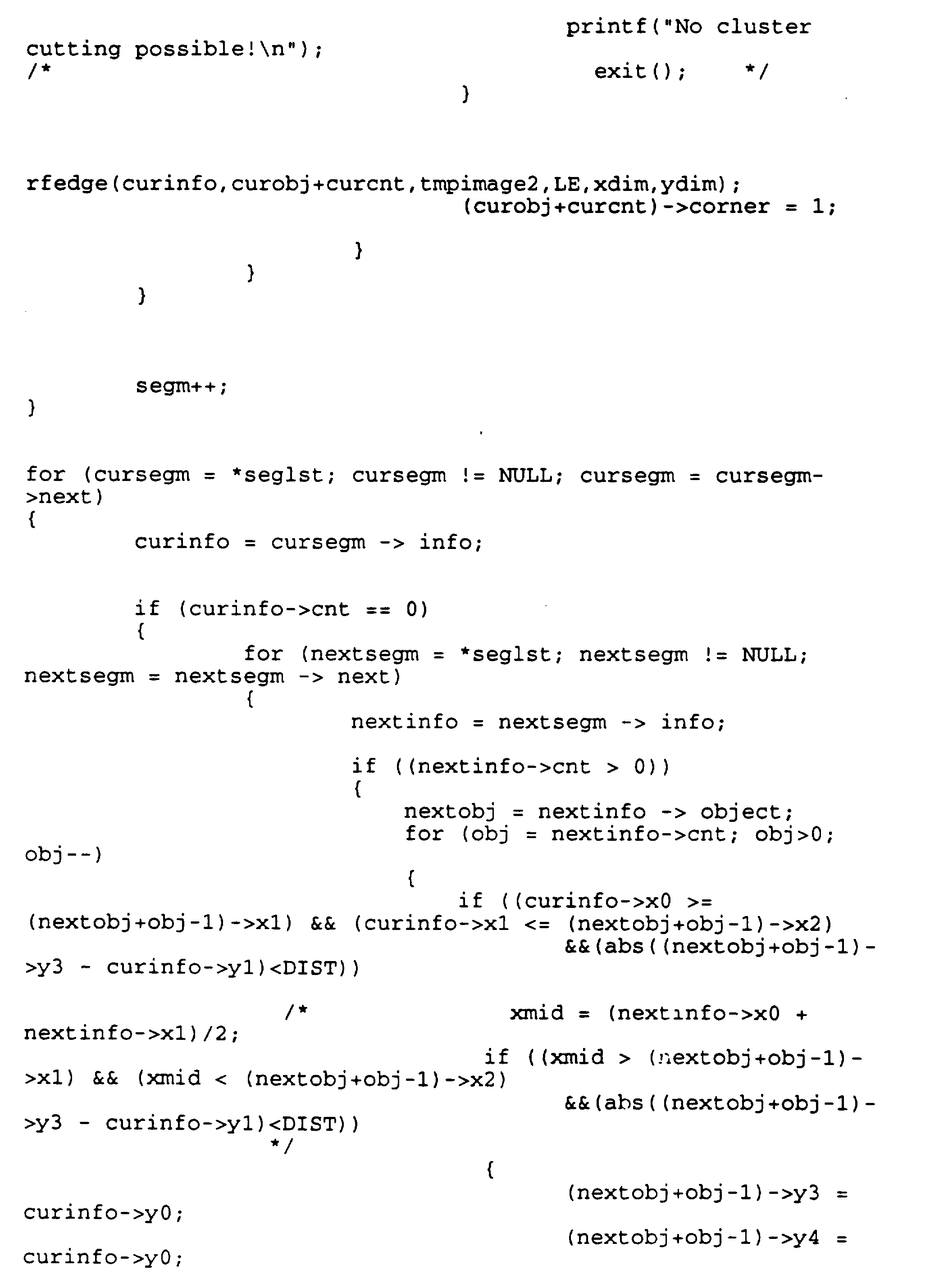

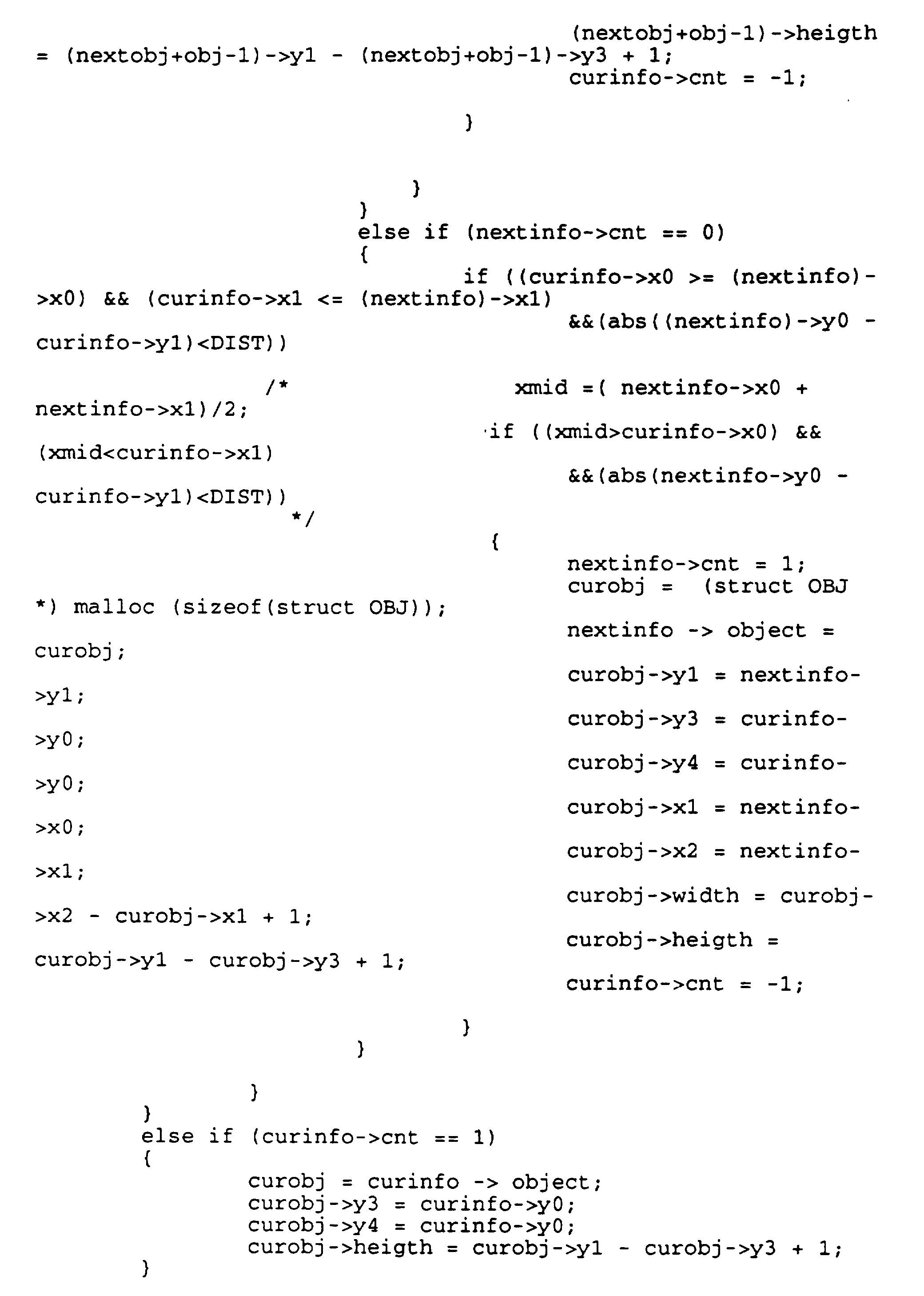

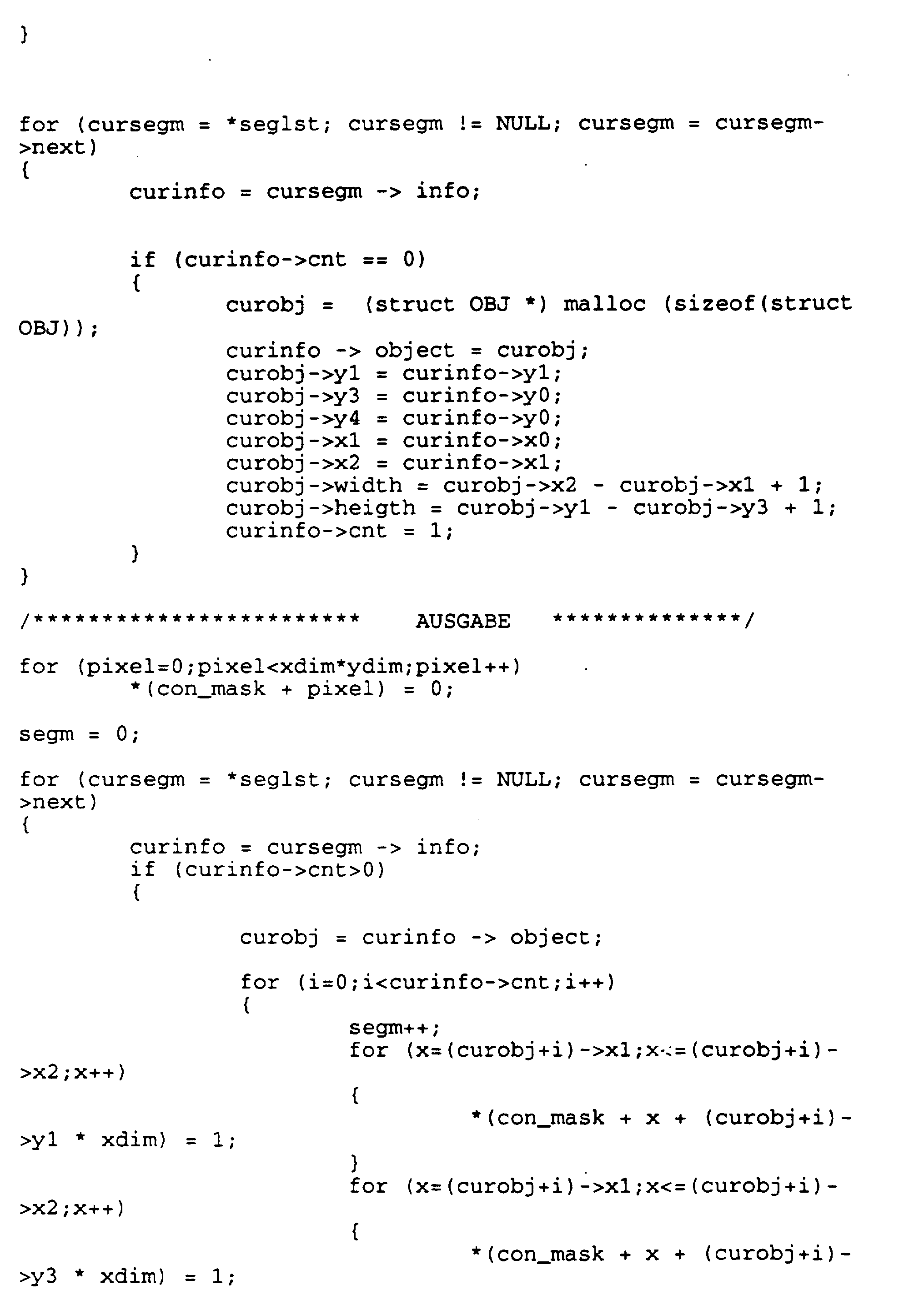

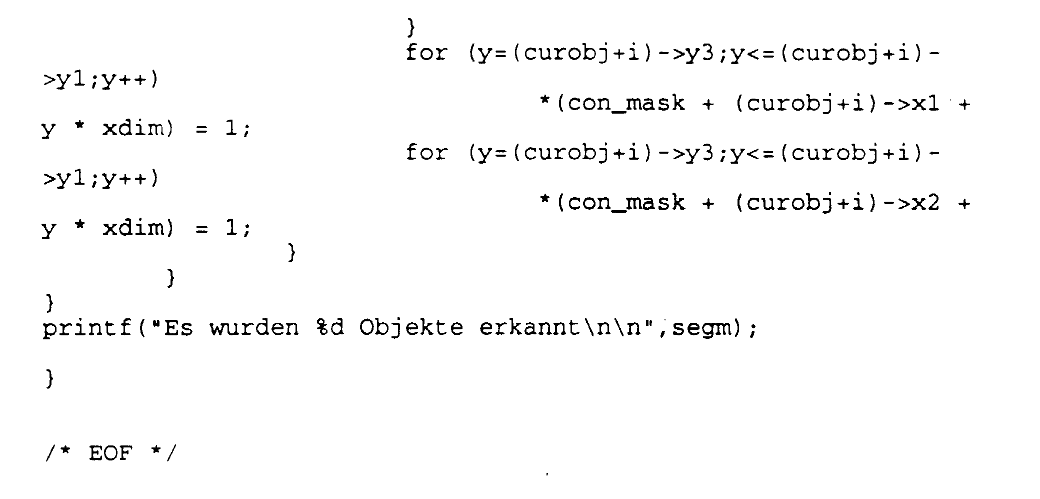

## Patentansprüche

1. Verfahren zur Auflösung von Clustern bewegter Segmente, welche mehrere sich gegenseitig teilweise verdeckende bewegte Objekte einer Videosequenz repräsentieren, mit folgenden Schritten:
a) in einem ersten Schritt werden Cluster bewegter Segmente detektiert, indem um die bewegten Segmente eines Videobildes umschreibende Rechtecke gelegt werden, deren Größe mit einer vorgegebenen Obergrenze verglichen wird; diejenigen bewegten Segmente, deren umschreibende Rechtecke größer sind als die vorgegebene Obergrenze, werden als Cluster bewegter Segmente kenntlich gemacht;
b) in jedem dieser Cluster wird in einem weiteren Schritt eine leitende horizontale Kante gesucht, welcher noch kein umschreibendes Rechteck zugeordnet ist; wird eine solche Kante gefunden, wird ihr ein umschreibendes Rechteck zugeordnet, welches die Breite dieser Kante besitzt und dessen Höhe durch die mittlere Höhe aller Objekte derjenigen Objektklasse aus einer vorgegebenen Menge von Objektklassen gegeben ist, deren Objekte eine mittlere Breite besitzen, die der Breite der Kante am nächsten liegt;
c) Wiederholung von Schritt b) bis keine leitende Kante ohne umschreibendes Rechteck mehr in dem jeweiligen Cluster detektiert werden kann.

2. Verfahren nach Anspruch 1, bei dem der der Kamera am nächsten gelegenen leitenden horizontalen Kante zuerst ein umschreibendes Rechteck zugeordnet wird.

3. Verfahren nach Anspruch 2, bei dem derjenigen leitenden horizontalen Kante ein umschreibendes Rechteck zugeordnet wird, welche sich unmittelbar links oder rechts von der vorhergehend bearbeiteten Kante innerhalb des selben Clusters befindet.

4. Verwendung eines Verfahrens nach einem der vorhergehenden Ansprüche zur Erzeugung einer symbolischen Szenenbeschreibung einer Videobildsequenz, wobei
a) bewegte Segmente und Cluster aus bewegten Segmenten in den Bildern einer Videobildsequenz detektiert werden;
b) Cluster bewegter Segmente in Segmente mit umschreibenden Rechtecken aufgelöst werden, wodurch bewegte Objekte, die sich teilweise gegenseitig verdecken, voneinander getrennt werden;
c) bewegte Objekte in ihrer Bewegung durch die Bildebene verfolgt werden, und
d) bewegte Objekte nach Objektklassen klassifiziert werden.

5. Verwendung eines Verfahrens nach einem der vorhergehenden Ansprüche zur Überwachung des Straßenverkehrs.

## Claims

1. Method for resolving clusters of moving segments, which represent a plurality of moving objects in a video sequence which partially conceal one another, having the following steps:
a) in a first step, clusters of moving segments are detected by circumscribing rectangles being placed around the moving segments of a video image, the size of which rectangles is compared with a predetermined upper limit; those moving segments whose circumscribing rectangles are larger than the predetermined upper limit are identified as clusters of moving segments;
b) in a further step, a dominant horizontal edge to which no circumscribing rectangle has yet been assigned is sought in each of these clusters; if such an edge is found, it is assigned a circumscribing rectangle whose width is the same as that of this edge and whose height is given by the mean height of all the objects in that object class from a predetermined set of object classes whose objects have a mean width which is closest to the width of the edge,
c) repetition of step b) until no more dominant edges without circumscribing rectangle can be found in the respective cluster.

2. Method according to Claim 1, in which the dominant horizontal edge located closest to the camera is the first to be assigned a circumscribing rectangle.

3. Method according to Claim 2, in which a circumscribing rectangle is assigned to that dominant horizontal edge which is located immediately to the left or right of the previously processed edge within the same cluster.

4. Use of a method according to one of the preceding claims for producing a symbolic scene description of a video image sequence, wherein
a) moving segments and clusters composed of moving segments are detected in the images of a video image sequence;
b) clusters of moving segments are dissolved into segments with circumscribing rectangles, by which means moving objects which partially conceal one another are separated from one another;
c) the movement of moving objects is tracked through the image plane, and,
d) moving objects are classified on the basis of object classes.

5. Use of a method according to one of the preceding claims for monitoring road traffic.

## Revendications

1. Méthode pour la résolution de groupes de segments en mouvement, qui représentent plusieurs objets en mouvement d'une séquence vidéo se recouvrant mutuellement en partie, comprenant les étapes suivantes :
a) dans une première étape, on détecte des groupes de segments en mouvement, en plaçant autour des segments en mouvement d'une image vidéo des rectangles circonscrits dont la taille est comparée à une limite supérieure prédéterminée ; les segments en mouvement dont les rectangles circonscrits sont plus grands que la limite supérieure prédéterminée sont marqués comme groupes de segments en mouvement ;
b) dans chacun de ces groupes, dans une autre étape, on cherche un bord horizontal directeur auquel un rectangle circonscrit n'est pas encore attribué ; si on trouve un tel bord, on lui attribue un rectangle circonscrit, lequel possède la largeur de ce bord et dont la hauteur est donnée par la hauteur moyenne de tous les objets de celle des classes d'objet, parmi une quantité prédéterminée de classes d'objets, dont les objets possèdent une largeur moyenne, qui est la plus proche de la largeur du bord ;
c) répétition de l'étape b) jusqu'à ce que plus aucun bord directeur sans rectangle circonscrit ne puisse être détecté dans le groupe respectif.

2. Méthode selon la revendication 1, dans laquelle on attribue un rectangle circonscrit d'abord au bord horizontal directeur le plus proche de la caméra.

3. Méthode selon la revendication 2, dans laquelle on attribue un rectangle circonscrit au bord horizontal directeur qui se trouve immédiatement à gauche ou à droite du bord traité précédemment au sein du même groupe.

4. Utilisation d'une méthode selon l'une des revendications précédentes pour générer une description de scène symbolique d'une séquence d'images vidéo, où
a) des segments en mouvement et des groupes de segments en mouvement sont détectés dans les images d'une séquence d'images vidéo ;
b) des groupes de segments en mouvement sont résolus en segments à rectangles circonscrits, de façon à séparer les uns des autres des objets en mouvement se recouvrant mutuellement en partie;
c) des objets en mouvement sont poursuivis dans leur mouvement à travers le plan image et
d) des objets en mouvement sont classés selon des classes d'objets.

5. Utilisation d'une méthode selon l'une des revendications précédentes pour le contrôle du trafic routier.
